# EUROPÄISCHE PATENTANMELDUNG

(11) **EP 4 685 640 A1**
(43) Veröffentlichungstag der Anmeldung: **28.01.2026**
(21) Anmeldenummer: 24191222.9
(22) Anmeldetag: 26.07.2024
(51) Int. Cl.: G06F 9/48, G06F 9/50

(54) **VERFAHREN UND SYSTEMMANAGEMENT ZUM BETRIEB EINER MEHRZAHL VON ECHTZEITANWENDUNGEN IN EINER MODULARISIERTEN INDUSTRIELLEN AUSFÜHRUNGSUMGEBUNG**

(71) Anmelder: Siemens Aktiengesellschaft, 80333 München (DE)
(72) Erfinder: Ottermann, Johannes, 92224 Amberg (DE); Schmidt, Steffen, 91230 Happurg (DE); Hnaien, Iheb, 80809 München (DE); Ivanov, Petr, 90473 Nürnberg (DE); Mössner, Rudolf, 93133 Burglengenfeld (DE); Ockel, Alexander, 74182 Obersulm (DE); Pokorny, Andreas, 91058 Erlangen (DE); Sathya, Gayathery, 92224 Amberg (DE); Schmidt, Ines, 92421 Schwandorf (DE); Steindl, Johanna, 92284 Poppenricht (DE)
(74) Vertreter: Siemens Patent Attorneys

(57) **Zusammenfassung**

Die Erfindung betrifft ein Verfahren und eine Anordnung zum Betrieb einer Mehrzahl von Echtzeitanwendungen (EA1, EA2) in einer modularisierten industriellen Ausführungsumgebung (AU), wobei durch ein Systemmanagement (SM) die Ausführung der Echtzeitanwendungen (EA1, EA2) auf den Modulen der Ausführungsumgebung (AU) gesteuert und überwacht wird. Dabei werden die Systemressourcen der Module jeweils in einem einheitlichen abstrakten Datenformat in einer dem Systemmanagement (SM) zugänglichen Ressourcendatenbank (RES) registriert, wobei die Ressourcenanforderungen der Echtzeitanwendungen (EA1, EA2) jeweils in dem einheitlichen abstrakten Datenformat an das Systemmanagement (SM) gemeldet werden. Durch das Systemmanagement (SM) werden durch eine Abbildung der Ressourcenanforderungen auf die Systemressourcen die Echtzeitanwendungen (EA1, EA2) derart auf die Module verteilt, dass die Ressourcenanforderungen der jeweiligen Echtzeitanwendungen (EA1, EA2) durch die jeweiligen Systemressourcen der zugeordneten Module jeweils erfüllt werden, wobei durch das Systemmanagement (SM) die Ausführung der jeweiligen Echtzeitanwendungen (EA1, EA2) mittels der Übertragung von Steuerbefehlen und Ausführungsparametern an die jeweiligen Echtzeitanwendungen (EA1, EA2) miteinander koordiniert und gesteuert wird, wobei durch die Echtzeitanwendungen (EA1, EA2) jeweils Laufzeitinformationen (LI) über den Ablauf an das Systemmanagement (SM) zurückgemeldet werden, und wobei durch das Systemmanagement (SM) die Laufzeitinformationen (LI) zum Feststellen von Fehlverhalten und zum Bestimmen von Optimierungen bezüglich der Verteilung der Echtzeitanwendungen (EA1, EA2) auf die Module und/oder der Anpassung von Ausführungsparametern der Echtzeitanwendungen (EA1, EA2) verwendet werden. Dieses Verfahren beschreibt das applikations- bzw. anwendungsübergreifende optimierte und koordinierte Ausführen unabhängiger Echtzeitanwendungen, auch in unterschiedlichen Betriebssystemprozessen und auf unterschiedlichen Hardware-Ressourcen.

## Beschreibung

Die Erfindung betrifft ein Verfahren, den Betrieb einer Mehrzahl von Echtzeitanwendungen in einer modularisierten industriellen Ausführungsumgebung gemäß dem Oberbegriff des Patentanspruchs 1 und ein Systemmanagement zur Durchführung des Verfahrens gemäß dem Oberbegriff des Patentanspruchs 9.

In klassischen Automatisierungsanordnungen mit Echtzeitanwendungen besteht die Ausführungsumgebung, also die auf die Steuerung bezogene Hardware-Landschaft, in der Regel aus einer echtzeitfähigen industriellen Steuerung und einer Echtzeitanwendung zur Steuerung einer Fertigung oder eines Prozesses. Heutige Ausführungsumgebungen sind häufig modular aufgebaut, d. h., dass in einem Netzwerk mehrere Hardware-Plattformen, kurz Module, angeordnet sind, auf die die abzuarbeitenden Anwendungen, insbesondere Echtzeitanwendungen, so verteilt werden, dass die auf dem jeweiligen Modul vorhandenen Systemressourcen (Rechenleistung, Speicher, Konnektivität etc.) zwar gut ausgenutzt werden, aber nicht überlastet werden, sodass die Echtzeitfähigkeit der einzelnen Echtzeitanwendungen und der Gesamtanwendung stets gegeben ist. Während in der klassischen Welt oft die Echtzeitanwendungen von einem Engineeringsystem desjenigen Herstellers erstellt wurden, der auch die Hardware (Module) bereitgestellt hat, sind heutzutage vermehrt offene Systemlandschaften im Einsatz, bei denen Hardware-Plattformen (Module) und Anwendungen verschiedener Hersteller und auf verschiedenen Architekturen und Betriebssystemen basierend miteinander eingesetzt werden und insgesamt das echtzeitfähige System bilden.

Die Erfindung betrifft somit ein offenes, modularisiertes, industrielles Steuerungssystem, auf dem verschiedene unabhängige Echtzeitapplikationen von unterschiedlichen Herstellern unter Einhaltung ihrer geforderten Ablaufqualitäten ausgeführt werden sollen. Diese Applikationen sollen gemeinsam eine industrielle Steuerungsaufgabe lösen und sollen ihren Echtzeitqualitätsanforderungen entsprechend ausgeführt werden. Die Echtzeitapplikationen brauchen Ressourcen (auch Systemressourcen genannt) zum Ablauf. Die Systemressourcen sind limitiert und variieren mit der Hardware der Ausführungsumgebung. Die Echtzeitapplikationen sollen sich gegenseitig möglichst nicht stören, insbesondere beim Zugriff auf die Systemressourcen nicht durch Zugriffskonflikte ihre Echtzeitfähigkeit einbüßen.

Der Anwender / Systemintegrator soll das System auf seinen konkreten Anwendungsfall hin konfigurieren können (v.a. im Engineering) und soll Möglichkeiten haben, das Systemverhalten zur Laufzeit zu beobachten, verifizieren und optimieren, und soll bei der Basis-Konfiguration (Engineering) und zur Laufzeit möglichst gut unterstützt werden.

Im Stand der Technik werden Real-time Tasks (Echtzeitapplikationen, im Folgenden auch Echtzeitanwendungen genannt) in einer zentralen "Runtimeapplikation" als Ausführungsumgebung in Form eines einzigen Betriebssystemprozesses ausgeführt. Es gibt keine unterschiedlichen, unabhängigen, einzelnen Echtzeitapplikationen. Der Anwendercode der Programmblöcke (Tasks) wird beispielsweise durch (dynamisches) Nachladen in die Ausführungsumgebung eingefügt. Beispiele sind S7-1500V, Codesys, Twincat, CtrlX Runtime u.a. Diese Runtimeapplikation bekommt vom System, konfigurierbar durch den Anwender, bestimmte Ressourcen zur Verfügung gestellt, die dann innerhalb der Runtimeapplikation als Ausführungsumgebung verwaltet werden. Die Konfiguration erfolgt dabei vorab und somit statisch durch das zentrale Engineering.

Es ist daher eine Aufgabe der vorliegenden Erfindung, für ein offenes Steuerungssystem (modularisierte Ausführungsumgebung) ein Verfahren und eine Anordnung vorzuschlagen, mit der eine Anzahl Echtzeitanwendungen auf die Module mit ihren jeweiligen Systemressourcen verteilt werden können und das System dabei so zu konfigurieren und kontrollieren, dass das Gesamtsystem einen Echtzeitprozess zuverlässig ausführt.

Ein Kernelement der erfindungsgemäßen Lösung dieser Aufgabe schlägt dazu ein zentrales Real-time Task Management, also ein auf diese Aufgabe angepasstes Systemmanagement, vor. Dieses unterstützt mehrere unabhängige Echtzeitapplikationen / Echtzeitanwendungen mit ihren echtzeitfähigen Tasks, und zwar sowohl native Applikationen als auch containerisierte Applikationen (z.B. Docker-Container / Kubernetes), die dann über eine vereinheitlichte Systemsicht gemanagt werden. Dazu erfolgt eine Abstraktion der Ressourcenanforderungen der Echtzeitanwendungen zum System. Dadurch wird es möglich, die Applikationen (Echtzeitanwendungen) unabhängig von der konkreten Laufzeitumgebung zu erstellen. Eine spezifische Applikationskonfiguration ist unnötig. Weiter erfolgt auch eine Abstraktion der Systemressourcen, die es ermöglicht, die Laufzeitumgebung zu beschreiben.

Die Aufgabe wird insbesondere durch das Verfahren nach Patentanspruch 1 und durch das Systemmanagement nach Patentanspruch 9 gelöst.

Dabei wird ein Verfahren zum Betrieb einer Mehrzahl von Echtzeitanwendungen in einer modularisierten industriellen Ausführungsumgebung vorgeschlagen, wobei durch ein Systemmanagement die Ausführung und ggf. die Verteilung und Installation der Echtzeitanwendungen auf den Modulen der Ausführungsumgebung gesteuert und überwacht werden. Dabei werden die Systemressourcen der Module jeweils in einem einheitlichen abstrakten Datenformat in einer dem Systemmanagement zugänglichen Ressourcendatenbank registriert, und die Ressourcenanforderungen der Echtzeitanwendungen werden jeweils in dem einheitlichen abstrakten Datenformat an das Systemmanagement gemeldet. Durch das Systemmanagement werden durch eine Abbildung der Ressourcenanforderungen auf die Systemressourcen die Echtzeitanwendungen derart auf die Module verteilt, dass die Ressourcenanforderungen der jeweiligen Echtzeitanwendungen durch die jeweiligen Systemressourcen der zugeordneten Module jeweils erfüllt werden, wobei durch das Systemmanagement die Ausführung der jeweiligen Echtzeitanwendungen mittels der Übertragung von Steuerbefehlen und Ausführungsparametern an die jeweiligen Echtzeitanwendungen miteinander koordiniert und gesteuert wird, wobei durch die Echtzeitanwendungen jeweils Laufzeitinformationen über den Ablauf an das Systemmanagement zurückgemeldet werden, und wobei durch das Systemmanagement die Laufzeitinformationen zum Feststellen von Fehlverhalten und zum Bestimmen von Optimierungen bezüglich der Verteilung der Echtzeitanwendungen auf die Module und/oder der Anpassung von Ausführungsparametern der Echtzeitanwendungen verwendet werden. Dieses Verfahren betrachtet das Problem applikations- bzw. anwendungsübergreifend und ermöglicht damit das Erstellen und koordinierte Ausführen unabhängiger Echtzeitanwendungen, auch in unterschiedlichen Betriebssystemprozessen und auf unterschiedlichen Hardware-Ressourcen.

Die Aufgabe wird ebenso durch ein Systemmanagement für die Installation und Kontrolle einer Mehrzahl von Echtzeitanwendungen auf einer Mehrzahl von Modulen einer Ausführungsumgebung gelöst. Dabei weist das Systemmanagement eine Schnittstelle zu einem Engineeringsystem für den Empfang von Daten über die mit den Echtzeitanwendungen jeweils verknüpften Ressourcenanforderungen auf, und das Systemmanagement weist Schnittstellen zu den Modulen der Ausführungsumgebung auf zur Kontrolle der Echtzeitanwendungen auf den Modulen und zum Empfang von Laufzeitinformationen über die Ausführung der Echtzeitanwendungen, und das Systemmanagement weist eine Schnittstelle zu einer Ressourcendatenbank mit Informationen über die Systemressourcen der Module oder die Ressourcendatenbank selbst auf, wobei das Systemmanagement eine Software zur Ausführung des vorstehend erläuterten Verfahrens aufweist. Damit lassen sich die bereits anhand des Verfahrens erläuterten Vorteile erzielen.

Vorteilhafte Ausgestaltungen des Verfahrens sind in den abhängigen Patentansprüchen angegeben. Die dabei erläuterten Merkmale und Vorteile gelten sinngemäß auch für das erfindungsgemäße Systemmanagement. Vorteilhafte Ausgestaltungen können sowohl einzeln, als auch in sinnfälliger Kombination miteinander realisiert werden.

Obwohl in einer Variante sich auch mehrere Echtzeitanwendungen eine gemeinsame Hardware-Plattform, also ein gemeinsames Modul, teilen können, wird in einer vorteilhaften Ausführungsform als das Modul jeweils eine separate Computerplattform, insbesondere eine speicherprogrammierbare Steuerung, ein Personal-Computer, ein separater Prozessorkern oder ein industrielles EDGE-Gerät, verwendet. Dies ermöglicht eine 1 : 1 Zuordnung von Echtzeitanwendungen zu den Modulen, was die Verwaltung der Systemressourcen vereinfacht und Zugriffskonflikte minimiert. Mischformen sind jedoch auch möglich. Vorteilhaft verwenden in dem Fall, in dem genug HW Ressourcen / Module vorhanden sind, die Echtzeitapplikationen getrennte Ressourcen.

Eine bessere Abstrahierung der Hardware bzw. Systemressourcen ist möglich, wenn als das Modul eine Laufzeitumgebung für containerbasierte Anwendungen verwendet wird und die Echtzeitanwendungen zumindest teilweise in Software-Container gekapselt werden. Ähnliches gilt bei der Verwendung von Virtualisierungslösungen, wenn also als Modul eine virtuelle Maschine auf einer Computerplattform verwendet wird.

Zur besseren Einflussnahme von Entwicklern oder Bedienpersonal auf das System insbesondere zur Laufzeit weist das Systemmanagement vorteilhaft eine Benutzeroberfläche auf, wobei idealerweise alle Echtzeitanwendungen und alle Module in einer einheitlichen Darstellungsweise dargestellt werden und wobei Mittel zur Änderung der Systemkonfiguration, insbesondere der Zuordnung von Echtzeitanwendungen zu den Modulen, vorgesehen sind, und wobei ebenso Ausgabemittel zur Anzeige von Fehlern und Metriken, insbesondere über die Echtzeit-Performance der Echtzeitanwendungen, eingesetzt werden. Vorteilhafterweise sind dabei auch übergreifende Parameter zugänglich, die die Zusammenarbeit der einzelnen Anwendungen betreffen, so dass die Echtzeitfähigkeit und das Verhalten des Gesamtsystems visualisiert und beeinflusst werden kann. Dabei kommt besonders vorteilhaft ein übergreifendes, abstrahierendes und gemeinsames Datenmodell zum Einsatz. Konkret wird für die Übertragung der Laufzeitinformationen ein einheitliches offenes Datenmodell für den uniformen Zugriff auf die Laufzeitinformationen verwendet. Gleiches gilt für eine einheitliche Beschreibungssprache der Ressourcenanforderungen und der Systemressourcen der Module und der gemeinsam verwendeten übergreifenden Ressourcen, z.B. der Kommunikationsverbindungen.

Vorteilhaft wird durch das Systemmanagement anhand der Verteilung der Echtzeitanwendungen auf die Module eine Installation bzw. De-Installation der Echtzeitanwendungen auf den jeweiligen Modulen initiiert, was sowohl eine Inbetriebnahme mit wenig oder keiner Benutzerinteraktion ("plug-and-play") und bedarfsweise eine dynamische Re-Konfigurierung im laufenden Betrieb ermöglicht. Dazu können vorteilhaft durch das Systemmanagement Anweisungen über die Installation bzw. De-Installation zu einer zentralen Komponente mit gespeicherten Echtzeitanwendungen, insbesondere zu einem Engineeringsystem oder einem anderen "Software-Repository", beispielsweise einem industriellen App-Store, gesendet werden.

Ein Ausführungsbeispiel des erfindungsgemäßen Verfahrens wird nachfolgend anhand der Zeichnungen erläutert. Es dient gleichzeitig der Erläuterung eines erfindungsgemäßen Systems bzw. Systemmanagements.

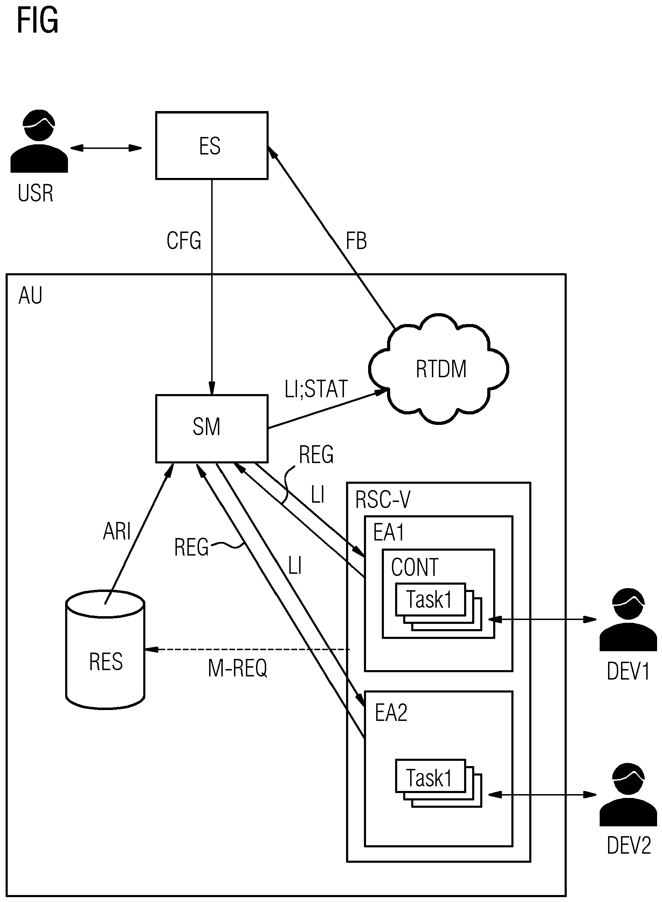

Dabei zeigt die einzige Figur in schematischer Darstellung ein Echtzeitaufgaben-Management und dabei eine Anordnung aus einem Engineeringsystem und eine Ausführungsumgebung mit dem erfindungsgemäßen Systemmanagement.

In der Figur ist ein Engineeringsystem ES dargestellt, welches der Projektierung und Programmierung von Anwendungen, insbesondere Echtzeitanwendungen, einer industriellen Automatisierungsanordnung dient. Regelmäßig wird ein Engineeringsystem ES durch einen Benutzer USR bedient. Das Engineeringsystem ES weist eine Schnittstelle zu einer Ausführungsumgebung AU auf, in der verschiedene zur Steuerung eines industriellen Prozesses oder einer Produktionseinrichtung geeignete Hardware-Plattformen, insbesondere speicherprogrammierbare Steuerungen, Industrie-PCs, industrielle EDGE-Geräte, reale und virtuelle Controller und dergleichen angeordnet sind. Alle diese genannten Geräte der Ausführungsumgebung AU sind also geeignet, Echtzeitanwendungen auszuführen, und werden im folgenden "Module" genannt, die jedoch aus Gründen der Übersichtlichkeit in der Figur nicht dargestellt sind. Die Module umfassen Systemressourcen, insbesondere Prozessoren oder Prozessorkerne, Programmspeicher, Arbeitsspeicher, Schnittstellen etc. An ein Datennetz der Ausführungsumgebung AU ist eine Ressourcendatenbank angeknüpft, in der die Systemressourcen der einzelnen Module in einer abstrakten Form beschrieben sind. Das Speichern der abstrakten Beschreibungen der Systemressourcen kann beispielsweise durch das Engineeringsystem ES erfolgen; vorteilhaft können sich jedoch alle Module selbst mit einer Beschreibung ihrer gesamten Systemressourcen und / oder der derzeit freien, ungenutzten Systemressourcen an die Ressourcendatenbank RES melden.

Als eine zentrale Komponente zur Verwaltung der Module und der Echtzeitanwendungen EA1, EA2 der Ausführungsumgebung AU ist an dasselbe Datennetz das Systemmanagement SM (auch Realtime Task Management genannt) angebunden, welches Schnittstellen, beispielsweise Datenkanäle oder dergleichen, zu dem Engineeringsystem ES und der Ressourcendatenbank RES und zu den (nicht dargestellten) Modulen bzw. Hardware-Plattformen unterhält. Das Systemmanagement SM umfasst eine Konfigurierungsfunktion mit einer Benutzeroberfläche RSC-V (Real-time Ressource Supervisor and Coordinator - View). Die Konfigurierungsfunktion RSC-V ist in der Figur grob schematisch dargestellt. In dem Beispiel sind dabei zwei Echtzeit Anwendungen EA1, EA2 gezeigt, wobei die Echtzeitanwendung EA1 in einer Container-Laufzeit Umgebung CONT abläuft und verschiedene Funktionsbausteine umfasst, bei denen beispielhaft eine Funktion Task 1 dargestellt ist; diese Sicht wird von einem ersten Entwickler DEV1 (Developer) bedient und entwickelt, während die Echtzeitanwendung EA2 nativ, also ohne Container-Abstraktionsschicht, betrieben wird und beispielsweise auf einem echtzeitfähigen industriellen Controller abläuft, wobei hier ebenfalls beispielhaft eine Funktion Task 1 gezeigt ist und wobei auch dieser Echtzeit-Kontext von einer Person, dem zweiten Entwickler DEV2, bedient wird.

Von dem Engineeringsystem ES wird eine Konfiguration CFG zu dem Systemmanagement SM übertragen, wobei diese Konfiguration CFG unter anderem Informationen darüber umfasst, welche Echtzeitanwendung EA1, EA2 auf welchem Modul (hier: Container-Ausführungsumgebung CONT oder der echtzeitfähige industrielle Controller) installiert ist oder installiert werden soll, und welche Ressourcen Anforderungen die jeweiligen Echtzeitanwendungen EA1, EA2 haben. Die Informationen über die Ressourcenanforderungen sind dabei auch in dem abstrahierten Datenformat beschrieben, welches in plattformunabhängiger Notation diese Informationen maschinenlesbar zugänglich macht. Ein solches abstrahiertes Datenformat kann Leistungsdaten über Ressourcenanforderungen, beispielsweise Speicherbedarf, erforderliche Kommunikationsbandbreite, Rechenleistung etc. in relativen oder absoluten Zahlen oder in Form von Leistungsklassen beschreiben; idealerweise werden solche Informationen in einer XML-Datei oder in einer anderen maschinenlesbaren Art gespeichert und übertragen. In der gleichen Weise ruft das Systemmanagement SM die Systemressourcen bzw. die Beschreibungen der Systemressourcen, die ebenfalls in dem oder einem anderen plattformunabhängigen Datenformat in der Ressourcendatenbank RES gespeichert sind, ab. In einer anderen Ausführungsvariante kann die Ressourcendatenbank RES auch in das Systemmanagement SM oder in das Engineeringsystem ES integriert sein, wobei Letzteres jedoch bedeutet, dass das Engineeringsystem ES auch zur Laufzeit der Automatisierungsanordnung online bleiben sollte, was nicht in jedem Fall gegeben sein mag.

Die Ressourcendatenbank RES umfasst auch Informationen M-REQ ("mapped requirements") darüber, welche Systemressourcen der Module bereits welcher Echtzeitanwendung EA1, EA2 zugeordnet und somit nicht mehr frei verfügbar sind, jedoch ggf. freigegeben werden können. Diese Informationen M-REQ werden von der Komponente RSC-V zu der Ressourcendatenbank RES übertragen und laufend aktualisiert und stehen über die Ressourcendatenbank RES auch dem Systemmanagement SM zur Verfügung. Zwar verfügt das Systemmanagement SM selbst über diese Informationen, weil die Komponente RSC-V Bestandteil des Systemmanagement SM ist, jedoch sind auch Architekturen möglich, in denen es mehrere Systemmanagements SM gibt oder mehrere Echtzeit-Produktionsmodule verwaltet werden müssen, sodass eine Vorhaltung dieser Informationen über eine systemweit zugängliche Ressourcendatenbank RES Vorteile ergibt.

Das Systemmanagement SM publiziert im laufenden Betrieb (Runtime; online) Laufzeitinformationen LI und statistische Informationen STAT über die laufenden Echtzeitanwendungen EA1, EA2, die zu diesem Zweck von den entsprechenden Modulen (nicht dargestellt) zu dem Systemmanagement SM übertragen, dort gesammelt und gespeichert werden und schließlich in ein Echtzeit-Datenmodell RTDM (real-time data model) übersetzt und insbesondere als Rückmeldung FB (Feedback) dem Engineeringsystem ES zum Zwecke der Optimierung des Engineerings zur Verfügung gestellt werden und auch an andere Einrichtungen, wie zum Beispiel HMI-Einrichtungen (Human Machine Interfaces, also Bedien- und Beobachtungsstationen), übermittelt werden können. Die Laufzeitinformationen LI und die statistischen Informationen STAT werden auch den Entwicklern DEV1, DEV2 auf der Benutzeroberfläche der Komponente RSC-V zur Verfügung gestellt; umgekehrt nehmen die Entwickler DEV1, DEV2 mittels der Benutzeroberfläche Einfluss auf die Konfiguration der verschiedenen Echtzeitanwendungen EA1, EA2, wodurch sich geänderte Ressourcenanforderungen REQ (requirements) ergeben, die an den Kern des Systemmanagements SM übertragen, dort gespeichert und zu einer Optimierung des "Mappings" der Echtzeitanwendungen zu den Modulen und zu einer Aktualisierung der Ressourcendatenbank RES in Bezug auf die benutzten (allokierten) Systemressourcen M-REQ verwendet werden.

Besonders vorteilhaft wird durch das Engineeringsystem ES auch eine Beschreibung - vorzugsweise in einem / dem plattformunabhängigen, abstrakten Datenformat - der zu erfüllenden Echtzeiteigenschaften des Gesamtsystems, also der Gesamtheit der miteinander eine Echtzeit-Automatisierungsaufgabe erfüllenden Echtzeitanwendungen EA1, EA2, an das Systemmanagement SM übermittelt und dort bei der "Orchestrierung", also der Organisation der Verteilung der Echtzeitanwendungen EA1, EA2 auf die verfügbaren Module und die Zuordnung der verfügbaren Systemressourcen zu den Echtzeitanwendungen EA1, EA2, sowie die Einstellung, Überwachung und Optimierung von Betriebsparametern der Ausführungsumgebung AU und speziell der Module, deren Betriebssysteme etc. und der Echtzeitanwendungen EA1, EA2 verwendet.

Das Systemmanagement SM koordiniert und steuert also die Ausführung und ggf. die Verteilung der jeweiligen Echtzeitanwendungen EA1, EA2 mittels der Übertragung von Steuerbefehlen und Ausführungsparametern an die jeweiligen Echtzeitanwendungen EA1, EA2, wobei durch die Echtzeitanwendungen EA1, EA2 jeweils Laufzeitinformationen über den Ablauf an das Systemmanagement SM zurückgemeldet werden.

In einer Variante kann das Systemmanagement SM auch Installationsdateien der Echtzeitanwendungen EA1, EA2 vom Engineeringsystem ES abrufen und die Installation und die Re-Installation bzw. Verschiebung von Echtzeitanwendungen EA1, EA2 auf den Modulen initiieren oder durchführen, oder das Systemmanagement SM kann entsprechende Installationsaufträge und De-Installationsaufträge an das Engineeringsystem ES übermitteln.

Das Systemmanagement SM bietet somit zentrales Engineering hinsichtlich der Konfiguration der Automatisierungsanordnung bzw. der Ausführungsumgebung AU zur Laufzeit in Bezug auf die echtzeittask-granulare Zuordnung von Systemressourcen zu den Echtzeitapplikationen bzw. -anwendungen unter Beachtung ihrer Ressourcenanforderungen. Hierdurch wird trotz der Unabhängigkeit der Einzelapplikationen eine koordinierte Verteilung der verfügbaren Systemressourcen ermöglicht, mit dem Ziel einer störungsfreien Ausführung der Applikationen und Tasks unter Einhaltung ihrer Laufzeitanforderungen. Dabei können bei Bedarf, z.B. aufgrund von Verfügbarkeitseinschränkungen oder Ressourcenauslastung, die verwendeten Systemressourcen auch zw. Echtzeittasks der gleichen, oder auch unterschiedlicher Applikationen und Module, gemeinsam genutzt und erforderlichenfalls rekonfiguriert werden.

Das beschriebene, zentrale, offene Datenmodell erleichtert die hersteller- und plattformunabhängige Beobachtbarkeit des Echtzeitsystems mit seinen unabhängigen Echtzeitanwendungen und Tasks, mit Schnittstellen zum Zugriff der Laufzeitinformationen. Dadurch können die Laufzeiteigenschaften der einzelnen Applikationen und Tasks überwacht und gegen ihre Anforderungen verifiziert werden. Das verwendete Datenmodell ermöglich auch den uniformen Zugriff auf die Laufzeitinformationen unabhängig von der Implementierung der konkreten Echtzeitapplikationen, Betriebssysteme, Architekturen der Module etc.

Aufgrund der gesammelten Laufzeitinformationen und Metriken LI, STAT können anwenderdefinierte Maßnahmen zum Eingriff bei Fehlverhalten ausgeführt und Optimierungen am System automatisch und zur Laufzeit durchgeführt werden. Vorgenommene Änderungen können als Feedback an das Engineering zurückgemeldet, dort zum Update der Projektinformationen genutzt und für spätere Optimierungen berücksichtigt werden.

Das Konzept betrachtet das Problem applikationsübergreifend und ermöglicht damit das Erstellen und Ausführen unabhängiger Applikationen (in unterschiedlichen Betriebssystemprozessen). Damit wird eine einheitliche Sicht über Applikationsgrenzen hinweg erstellt. Im Gegensatz dazu stehen die bisherigen Lösungen, die den Anwendercode in einer einzigen Laufzeitapplikation (ein einzelner Betriebssystemprozess) zusammenfassen, und damit keine Unabhängigkeit der Anwendungsteile garantieren (z.B. durch den geteilten Prozessraum).

Das Konzept erlaubt den Mischbetrieb und die Verwaltung von nativen und containerisierten Echtzeitapplikationen.

Das offene Datenmodel ermöglicht eine einfache Anbindung von Applikationen und Diensten Dritter.

Die Abstraktion von Systemressourcen von Anwendungsanforderungen ermöglicht die Portierbarkeit der Applikationen und Adaption an unterschiedliche Laufzeitumgebungen per Systemkonfiguration.

## Patentansprüche

1. Verfahren zum Betrieb einer Mehrzahl von Echtzeitanwendungen (EA1, EA2) in einer modularisierten industriellen Ausführungsumgebung (AU),
wobei durch ein Systemmanagement (SM) die Ausführung der Echtzeitanwendungen (EA1, EA2) auf den Modulen der Ausführungsumgebung (AU) gesteuert und überwacht wird,
**dadurch gekennzeichnet,**
**dass** die Systemressourcen der Module jeweils in einem einheitlichen abstrakten Datenformat in einer dem Systemmanagement (SM) zugänglichen Ressourcendatenbank (RES) registriert werden,
**dass** die Ressourcenanforderungen der Echtzeitanwendungen (EA1, EA2) jeweils in dem einheitlichen abstrakten Datenformat an das Systemmanagement (SM) gemeldet werden,
**dass** durch das Systemmanagement (SM) durch eine Abbildung der Ressourcenanforderungen auf die Systemressourcen die Echtzeitanwendungen (EA1, EA2) derart auf die Module verteilt werden, dass die Ressourcenanforderungen der jeweiligen Echtzeitanwendungen (EA1, EA2) durch die jeweiligen Systemressourcen der zugeordneten Module jeweils erfüllt werden,
**dass** durch das Systemmanagement (SM) die Ausführung der jeweiligen Echtzeitanwendungen (EA1, EA2) mittels der Übertragung von Steuerbefehlen und Ausführungsparametern an die jeweiligen Echtzeitanwendungen (EA1, EA2) miteinander koordiniert und gesteuert wird, wobei durch die Echtzeitanwendungen (EA1, EA2) jeweils Laufzeitinformationen (LI) über den Ablauf an das Systemmanagement (SM) zurückgemeldet werden,
**dass** durch das Systemmanagement (SM) die Laufzeitinformationen (LI) zum Feststellen von Fehlverhalten und zum Bestimmen von Optimierungen bezüglich der Verteilung der Echtzeitanwendungen (EA1, EA2) auf die Module und/oder der Anpassung von Ausführungsparametern der Echtzeitanwendungen (EA1, EA2) verwendet werden.

2. Verfahren nach Patentanspruch 1,
**dadurch gekennzeichnet,**
**dass** als das Modul eine separate Computerplattform, insbesondere eine speicherprogrammierbare Steuerung, ein Personal-Computer oder ein industrielles EDGE-Gerät, verwendet wird.

3. Verfahren nach einem der vorhergehenden Patentansprüche,
**dadurch gekennzeichnet,**
**dass** als das Modul eine Laufzeitumgebung für containerbasierte Anwendungen verwendet wird, wobei die Echtzeitanwendungen (EA1, EA2) zumindest teilweise in Software-Containern gekapselt werden.

4. Verfahren nach einem der vorhergehenden Patentansprüche,
**dadurch gekennzeichnet,**
**dass** als das Modul eine virtuelle Maschine auf einer Computerplattform verwendet wird.

5. Verfahren nach einem der vorhergehenden Patentansprüche,
**dadurch gekennzeichnet,**
**dass** das Systemmanagement (SM) eine Benutzeroberfläche aufweist, wobei alle Echtzeitanwendungen (EA1, EA2) und alle Module in einer einheitlichen Darstellungsweise dargestellt werden und wobei Mittel zur Änderung der Systemkonfiguration, insbesondere der Zuordnung von Echtzeitanwendungen (EA1, EA2) zu den Modulen, und Ausgabemittel zur Anzeige von Laufzeitinformationen (LI), Fehlern und/oder Metriken, insbesondere über die Echtzeit-Performance der Echtzeitanwendungen (EA1, EA2), eingesetzt werden.

6. Verfahren nach einem der vorhergehenden Patentansprüche,
**dadurch gekennzeichnet,**
**dass** für die Übertragung der Laufzeitinformationen (LI) ein einheitliches offenes Datenmodell für den uniformen Zugriff auf die Laufzeitinformationen (LI) verwendet wird.

7. Verfahren nach einem der vorhergehenden Patentansprüche,
**dadurch gekennzeichnet,**
**dass** durch das Systemmanagement (SM) anhand der Verteilung der Echtzeitanwendungen (EA1, EA2) auf die Module eine Installation bzw. De-Installation der Echtzeitanwendungen (EA1, EA2) auf den jeweiligen Modulen initiiert wird.

8. Verfahren nach Patentanspruch 7,
**dadurch gekennzeichnet,**
**dass** durch das Systemmanagement (SM) Anweisungen über die Installation bzw. De-Installation zu einer zentralen Komponente mit gespeicherten Echtzeitanwendungen (EA1, EA2), insbesondere zu einem Engineeringsystem (ES), gesendet werden.

9. Systemmanagement (SM) für die Installation und Kontrolle einer Mehrzahl von Echtzeitanwendungen (EA1, EA2) auf einer Mehrzahl von Modulen einer Ausführungsumgebung (AU),
**dadurch gekennzeichnet,**
**dass** das Systemmanagement (SM) eine Schnittstelle zu einem Engineeringsystem (ES) für den Empfang von Daten über die mit den Echtzeitanwendungen (EA1, EA2) jeweils verknüpften Ressourcenanforderungen aufweist,
**dass** das Systemmanagement (SM) Schnittstellen zu den Modulen der Ausführungsumgebung (AU) zur Kontrolle der Echtzeitanwendungen (EA1, EA2) auf den Modulen und zum Empfang von Laufzeitinformationen (LI) über die Ausführung der Echtzeitanwendungen (EA1, EA2) aufweist,
**dass** das Systemmanagement (SM) eine Schnittstelle zu einer Ressourcendatenbank (RES) mit Informationen über die Systemressourcen der Module oder die Ressourcendatenbank (RES) selbst aufweist, und
**dass** das Systemmanagement (SM) eine Software zur Ausführung eines der Verfahren der Patentansprüche 1-8 aufweist.
